# EUROPEAN PATENT SPECIFICATION

(11) **EP 3 741 215 B1**
(45) Date of publication and mention of the grant of the patent: **05.03.2025**
(21) Application number: 18900124.1
(22) Date of filing: 28.12.2018
(51) Int. Cl.: A21B 3/13, A47J 27/04, A47J 36/32, A47J 37/06, A45C 11/20, B65D 13/00, B65D 65/46

(54) **EDIBLE CONTAINER FOR FOODSTUFFS AND THERMAL MOLD**
ESSBARER BEHÄLTER FÜR LEBENSMITTEL UND THERMISCHE FORM
CONTENEUR COMESTIBLE POUR ALIMENTS ET MOULE À PRESSION

(30) Priority: 15.01.2018 RU 2018101310
(43) Date of publication of application: 25.11.2020
(73) Proprietor: Petrov, Maksim Sergeevich, Moscow, 115551 (RU)
(72) Inventor: Petrov, Maksim Sergeevich, Moscow, 115551 (RU)
(74) Representative: ETL IP Patent- und Rechtsanwaltsgesellschaft mbH
(86) International application number: PCT/RU2018/050170
(87) International publication number: WO 2019/139505

(56) References cited:
- WO-A1-2009/130556
- JP-A- 2003 284 486
- JP-A- 2009 113 842
- JP-A- 2011 037 476
- RU-U1- 96 735
- US-A- 1 936 835
- US-A- 4 214 517
- US-A- 5 376 320
- US-A1- 2008 008 785

## Description

### Field of Invention

The invention relates to the field of cooking and bakery production, in particular to the field of fast food.

### Prior Art

The modern world is accelerating more and more, and people are increasingly choosing for themselves "what's faster," including fast food. And this means: quick hunger relief, (relatively) low price, monotonous and extremely limited menu and great harm to health, despite the fact that all this is accompanied by a huge amount of garbage, most of which is food product packaging. In this regard, in the modern market of culinary products, there is a need for culinary containers containing various fillings and allowing dispense with packaging, since the culinary container is edible.

The edible container is not designed to fight against fast food, but to ensure its qualitative improvement / change from the inside. So, the edible container is designed to preserve the obvious advantages of "fast food" while reducing its disadvantages due to: expanding the range of the menu, offering healthier foods and dishes, refusing packaging, disposable tableware and appliances. The main idea of an edible container is simple: to make a completely closed edible packaging for placing food in it. It looks like a wafer cup - food is eaten along with the packaging.

For example, an edible container is known to contain two identical forming modules-halves made by bending the edges towards each other with the possibility of connecting them along the entire perimeter of the outer contours of the modules-halves, while the connected edges of the modules have a wave-like profile consisting of alternately convex and concave segments having the same profile, length and height, and when two modules are connected, all the convex and concave segments of one module are completely in contact with all the concave and convex segments of another module. For the convenience and reliability of the module-half fixing, the container can be equipped with an additional clamp of two modules-halves, made in the form of a paper tightening tape covering them, tightly attached by a sticky substance deposited on the surface of one of its ends (RU 96735, A45C 11/20, A47J 47/14, published on 20.08.2010). This solution was taken as a prototype for the claimed subject (edible container).

The known edible container has a number of serious drawbacks, which did not allow using it to the fullest convenience. The known container is made of two interconnected halves, inside of which the food product itself is located. But these halves are made like trays, that is, they have a practically flat or slightly convex bottom. When squeezed by hand while eating, the bottom parts are affected by the natural pressure of the fingers. Due to the fact that the container is made of baked dough and has a brittle structure with a small wall thickness, such a container often fell apart in the hands due to the appearance of longitudinal cracks in the shell of this tray. Another disadvantage is that both trays (of module-half) of the container docked along the end surfaces of the side walls. The presence of a wave-like shape at the contact point made it possible to exclude the displacement of the halves relative to each other due to the fact that a symmetrical closed contact contour is formed. But when biting off the edge of the container, this mutual balance in the position of the halves was violated, and the halves first moved along and then to the sides along the contact surface (horizontal displacement), which led to a violation of the shape and the container to fall apart. This creates inconvenience in use and does not allow considering such a container suitable for use in a mass and fast food system.

That is why in the known container a binding paper tape is used, which wraps the container to prevent the displacement of the halves while eating. At the same time, as the container is eaten, this tape has to be moved down, which also not only complicates the design, but also creates inconvenience for use.

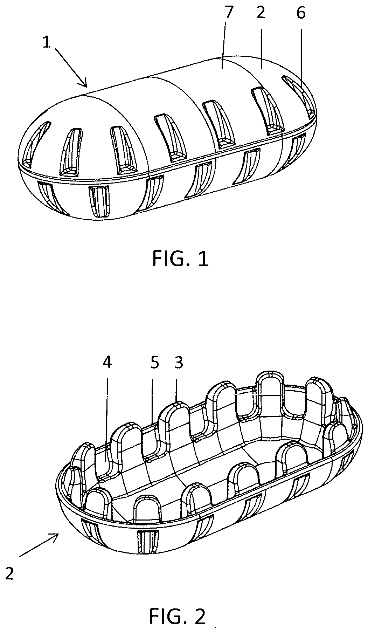

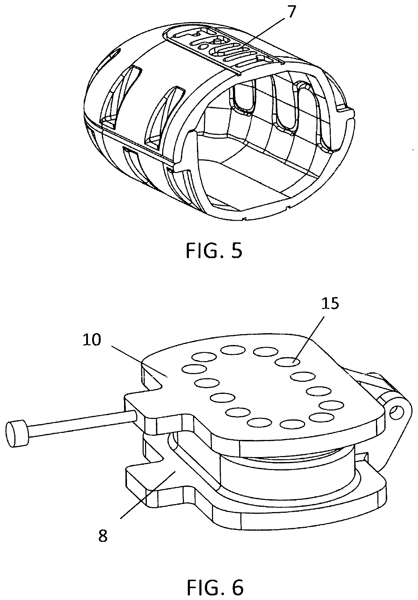

Such halves in the form of trays are made in thermal presses repeating the design of wafer molds used for baking the wafer cups. Such wafer molds for baking hollow wafer products typically contain a base heating plate with recesses repeating the external shape of the cup, which is a matrix, and a second heating plate turned in relation to the matrix, which is a punch and bears the protrusions, repeating the internal shape of the cup, wherein protrusions, when closing the plates, move into the recesses in which they are located with a gap relative to the wall of the recesses (RU 2345525, ABB 5/02, A21B 5/02, published on 10.02.2009). This solution was taken as a prototype for an object - a thermal press for the manufacture of parts of an edible container.

When the set temperature for heating the plates has been reached, a portion of dough is put into each recess and lowers the punch until the plates come into contact with each other. The protrusions, delving into the recesses of the matrix, squeeze the dough, causing it to spread along the wall of the recess. After that the dough mass is baked and crystallized under the influence of temperature taking the form of a thin-walled cup. As a rule, the plates are adjacent to each other with the formation of gaps in some places to ensure the release of steam and relieve high pressure in the recesses. These places are exactly at the level of the flange of the cup (gas and vapor come from the dough). But due to the fact that the edges of the cup are not pressed, these edges of each cup become uneven, chipped, which, when used for ice cream, does not spoil the presentation, since this edge is not used for anything.

### Summary

The present invention is aimed at achieving a technical result, which consists in maintaining the strength of the container by eliminating the displacement of its halves when eating the container itself and its contents.

The specified technical result for the first object is achieved by the fact that in an edible container for food products containing two halves of the same shape and design, each of which is made of baked dough and has the form of a thin-walled tray with side walls on which protrusions and hollows are made, herewith, each half is made symmetrical in plan in the shape of the tray relative to at least one axis passing along the surface of the bottom of the tray, and both halves are interconnected with the location of the protrusions of one half in the hollows of the other half for the formation of a hollow thin-walled shell, along the edge of the side walls of each tray a support end platform is made to ensure resting of the trays against each other when they are connected, and protrusions and hollows in each tray are located along this support platform from the side of the inner wall of the tray while the protrusions are located above the level of the support platform, and the hollows are located below this level, the recesses are made on the outer surface of the tray opposite to each protrusion inside the tray extended along the height of side wall to form stiffeners on the outer surface, and each protrusion in the tray is located opposite to such the recess.

The specified technical result for the second object is achieved in that the thermal mold for baking the halves of the edible container contains the first heated plate, which is a matrix and bears at least one recess, repeating the external shape of the baked product, the second heated plate, which is a punch and bears at least one protrusion, repeating the internal shape of the product, while when closing the plates, the protrusion is located in the recess with a gap relative to the wall of the recess, when closing the plates are made with contacting each other in the area around the location of the recess made in the form of a tray open at the top, having an end platform along the edge of the side wall and protrusions located along this platform located above the level of this platform, and hollows located on the inner wall of the tray, wherein the body of the second heated plate above the cavity in the zone of formation of the protrusions of the product includes the through holes, each of which is made on the inner side of this plate with a cylindrical area that ends with tapered extension on the outer side of the plate.

The specified technical result for the third object is achieved in that the device for extracting the halves of the edible container from the mold and cleaning the gas vents of the thermal mold contains a base flat on one side on which spokes are fixed at points corresponding to the locations of the through holes on the punch of a thermal mold for introducing these spokes into these holes.

Said features are essential and related to formation of the steady combination of essential features sufficient for achievement of the necessary technical result.

The present invention is explained by the specific embodiment which, however, is not the only one possible, but illustrates the possibility of achievement of the necessary technical result.

### Description of Drawings

Fig. 1 is a perspective view of an oblong edible container;
Fig. 2 is a half of a tray-shaped container for the example of Fig. 1;
Fig. 3 is a perspective view of a round edible container;
Fig. 4 is a half of a tray-shaped container for the example of Fig. 3;
Fig. 5 is a cross-sectional view of the container of Fig. 1;
Fig. 6 is a thermal mold for making of one half for the container, closed position of the plates;
Fig. 7 is a thermal mold for making of two halves for the container, open position of the plates;
Fig. 8 is the location of the through hole for the exit of the gas-vapor agent over the protrusion of the half;
Fig. 9 is a demonstration of the shape of the through hole for the exit of the gas-vapor agent;
Fig. 10 is a cross-section of the mold through holes;
Fig. 11 is a device for removing the halves of the edible container from the mold and cleaning the through gas vents in the mold;
Fig. 12 is a position of the extraction device over the thermal mold;
Fig. 13 shows the process of extraction of dough by the volume of the gap in the mold.

### Preferred Embodiments

According to the present invention, the design of an edible container consists of two identical edible halves interconnected for consumption of "difficult" products: vegetable and fruit salads, cottage cheese, mashed potatoes, various side dishes, canned foods and cereals. The edible container is made as a wafer cup from baked dough.

In addition, the proposed device allows the following:
- to make it technically possible to use on the street all products and dishes (except liquid ones) without using a table in a cafe, without any tableware, cutlery and packaging;
- to ensure maximum reliability of use in street conditions: not to crumble, losing its integrity, both in horizontal and vertical positions, not to lose the products and dishes contained in it, or become unusable during the whole process of use;
- be simple and convenient to use.

The culinary edible container is a small box that is easy to hold in one hand, called a container made of edible material. The container may contain any food except liquid. The modules-halves forming the cooking container can be made from baked dough similar to the dough used in waffle production or other edible material providing such necessary technical qualities as edibility, density and brittleness.

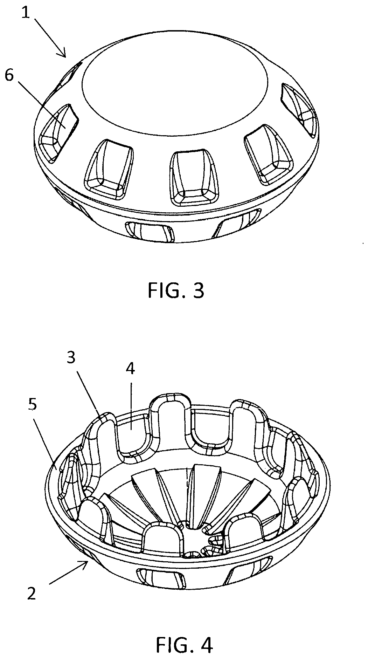

The edible container 1 for food products (Figs. 1 and 3) consists of two halves 2 of the same shape and design, made, for example, from baked dough, which gives this container such a positive property as edibility.

Each half 2 is made in plan in shape of the tray symmetrical with respect to at least one axis passing along the surface of the bottom of the tray. That is, if you look at the half (tray) from above, then its left part is made identical in shape to the right side. This is necessary so that when the half is flipped, it can be installed on the side of the side wall of the lower half of the tray. For an example of execution of an oblong shaped container (Figs. 1 and 2), symmetry is observed along the longitudinal and transverse axes. For an example of a container with a circular shape in the plan (Figs. 3 and 4), symmetry is observed with respect to all axes passing through the geometric center of the figure in the plan.

Each half 2 has the form of a thin-walled tray with side walls (Figs. 2 and 4), on which protrusions 3 and hollows 4 are made, thanks to which both halves are interconnected without displacements. Both halves are interconnected with the location of the protrusions of one half in the hollows of the other half to form a hollow thin-walled shell.

To avoid displacements and ensure reliable fixation of the halves in the collection container an end support platform 5 is made along the edge of the side walls of each tray to ensure resting of the trays against each other when they are connected. The protrusions and hollows in each tray are located along this supporting platform from the side of the inner surface of the tray. The protrusions are located above the level of the support platform, and the hollows are located below this level. Moreover, each protrusion in the tray is located opposite to the recess.

The protrusions (pins) and hollows alternately form a closed loop in which the number of protrusions and hollows is always the same, with at least one axis of symmetry of the module passing strictly along the boundary between the protrusion and hollow, so that on one side of the axis of symmetry there is a protrusion, and on the other hand, a hollow.

This allows connection of the halves of the same shape and design without additional manipulation of turning and orienting one half relative to the other.

When connecting, both halves sit on top of each other resting against their end support platforms (since the halves are made identical in shape to, for example, the longitudinal axis of symmetry running along the bottom of the tray). Thus, the positioning of the trays for receiving the container is performed. And since the protrusions are located above the level of these platforms, when connecting the trays, the protrusions of one tray enter the hollows inside the other tray and ensure the exclusion of lateral displacements on either side of the trays. When biting off the edge of the container, the fixation mode remains and the halves do not diverge to the sides.

Additionally, recesses 6 are made on the outer surface of the tray opposite to each protrusion inside the tray extended along the height of the side wall to form stiffeners on the outer surface. The need to perform these stiffeners is due to two moments. The first is that the tray (half) is a thin-walled shell made of baked dough. When baking, it is necessary to achieve uniformity of the structure of this shell and the same maturity (ripeness) of the shell over its entire surface. This is achieved only if all the walls in the dough piece are approximately equal in thickness. And in the claimed design of the tray, the wall thickness in the region of the protrusions is significantly greater than the wall thickness in the region of the hollows. When baking, all the walls will reach the baked maturity faster than those areas that are adjacent to the protrusions. These areas will be underbaked. And if you wait for baking of these areas, then the remaining walls burn out. In this regard, the implementation of the recesses on the outer surface of the tray opposite to the protrusions leads to the fact that the wall thickness is leveled and becomes approximately the same throughout the design of the tray. The second one is that all thin-walled shells, regardless of the technology or material they are used for, have increased torsion ability, which, for their embodiment from dough, leads to destruction of the tray. The stiffeners of such shells significantly increase torsion resistance.

On the outer surface of the bottom of the trays places 7 can be provided for applying information. This information can be presented in the form of an inscription or picture obtained by embossing during baking, as is done when baking wafer cups (corrugated mesh) (Figs. 1 and 5).

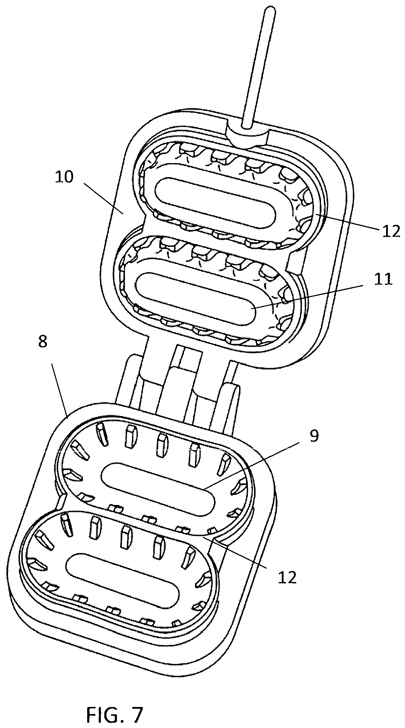

Operational reliability in the use of such edible containers is based on the reliable connection of the halves (trays) with each other. This is only possible if, when baking the trays, the accuracy of the shapes of the supporting platform, protrusions and hollows is achieved. And this is possible only when these areas of the tray are in the thermal mold in a limited volume for the flow of dough. In this regard, to obtain such halves with the exact configuration of the perimeter part of the side wall, a thermal mold with new design is used (Figs. 6 and 7).

The thermal mold for baking the halves of the edible container contains the first heated plate 8, which is a matrix and bears at least one recess 9 (there can be more than one such recesses), repeating the external shape of the baked product, the second heated plate 10, which is a punch and bears on at least one protrusion 11, repeating the internal shape of the product. In this part, the mold design follows the well-known mold designs for baking ice cream wafer cups (for example see http://www.classifieds24.ru/biisk/oborudovanie-dlia-biznesa-dlia-pishchevoi-promyshlennosti/apparat-pech-press-3080669.html).

When the plates 8 and 10 are closed, the protrusion 11 is located in the recess 9 with a gap relative to the wall of the recess.

A feature of the new mold is that when the plates 8 and 10 are closed, they are in contact with each other in the zone (area 12) around the location of the recess. When the plates are closed, they contact these areas, practically sealing the gap cavity and do not allow the dough to flow out of the gap. The cavity of the gap between the wall of the recess in the matrix and the wall of the protrusion on the punch repeats in volume the shape of the tray open at the top, the design of which is presented in the form of variants in Figs. 2 and 4.

During baking, vapors and gases are released, creating increased pressure in the gap cavity, which must be vented. With a tight fit of plates 8 and 10, pressure relief is excluded, since the cavity of the gap 13 where the dough is located is blocked to prevent leakage of the dough. To solve this problem the through holes (gas tubes) are made in the body of the second heated plate 10 above the cavity in the zone of formation of the protrusions of the product, each of which is made on the inside of this plate with a cylindrical section 14, which ends with a cone-shaped extension 15 on the outside of this plate (Figs. 6, 8-10).

Numerous gas ducts are located only in the upper part of the mold - in the punch, directly above the center of the pin cavity. The number of gas ducts determines the number of module pins: quantity of studs of the module is similar to quantity of gas ducts.

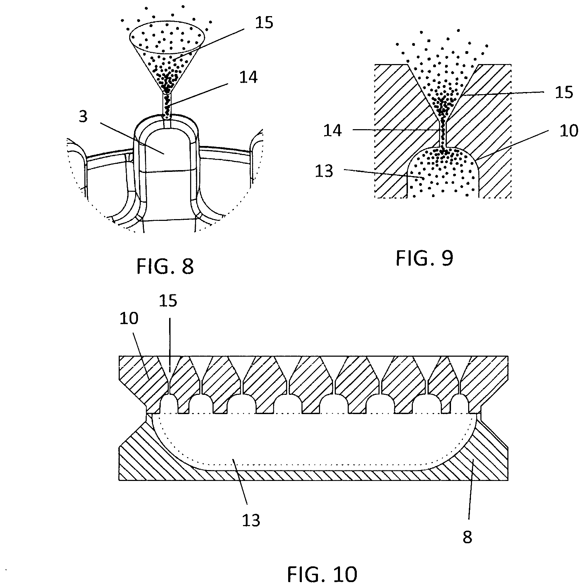

When baking, the dough spreads over the cavity of the gap and expends in volume, which leads to the filling of the entire cavity. Gases and vapors released from the dough "escape" through the through holes to the outside, as shown in Fig. 8. Since during baking the dough is firmly pressed against the walls of the matrix and punch, a smooth and even surface of the supporting platform, protrusions and indentations on the half wall is formed.

For making of trays (halves) in a thermal mold, both parts of the press are heated to the baking temperature of the dough. Then, liquid wafer dough is poured into the lower part of the press (into the concave matrix) and the press is closed with its curved part (punch).

During baking, the boiling wafer dough rises along the inner cavity of the waffle press, filling the entire enclosed volume, including the cavity of the pins. Gradually standing out from the boiling dough, hot water vapor rises to the upper part of the mold, where, having gathered in the pin cavities, it comes out in thin jets through gas pipes and funnel-shaped nozzles adjoining them in the outer surface of the punch. Unlike steam, the dough, which is filled with the pin cavities of the mold, cannot pass through the vent pipes; their diameter is small and the dough is too viscous and thick.

The press opens only after the final evaporation of moisture and baking of the dough module. The convex wafer obtained in the press (edible container module) is removed for final cooling and hardening.

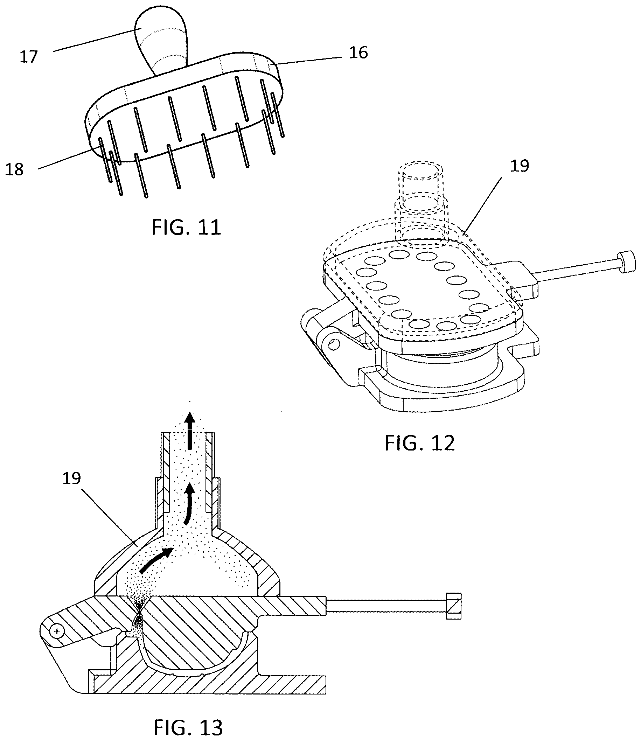

Some part of the dough can fill part of the through hole or block it. Therefore, it is advisable to periodically clean the holes. To do this, use a device for cleaning holes in a thermal mold for baking halves of an edible container (Fig 11), which contains base 16 having a handle or grip 17 for easy manual use. On the other side, the base is flat and on this side the spokes 18 are fixed at the points corresponding to the locations of the through holes on the punch of the thermal mold for introducing these spokes into these holes. The operator takes the device by the handle, places the spokes on the outside of the punch opposite to the through holes and inserts the spokes into the through holes. Wide funnels guide the punch spokes into the gas ducts and they are cleaned in one motion. If any hole is clogged, the spoke knocks the crumbs out.

In addition, this device can be used to remove the module (half) from the punch, if this module sticks to the protrusions of the punch.

The design of the thermal press can be supplemented by a forced extraction device (Fig. 12). The extraction device is needed exclusively for "raising" the dough in the cavity of the pins, since the natural expansion of the boiling dough is rather slow due to the small holes in the punch.

The forced exhaust device (Fig. 12) includes a cap 19 placed on the outer surface of the punch around the through holes (so that these holes are inside the cap), the cavity of which is connected with the compressor for pumping air from this cavity (not shown).

The extraction device with an electric compressor turns on only in the first seconds after pouring the liquid dough and lowering the punch. As soon as the dough fills the cavities of the protrusions, the extraction device is turned off and further baking of the container modules occurs in the normal mode. The extraction funnel may not be a permanent structural element; it will be coupled for a short period of time.

This invention is industrially applicable and may be manufactured using technologies used in the manufacture of wafer cups. Multiple testing of samples together with the wide variety of products and dishes placed inside them in practice confirmed the correct design and the very idea of an edible container. During testing, three important results were established:
- Maintaining the form. When assembled (with food placed inside a closed volume), the edible container can be stored for hours or even days without losing its original shape.
- Reliability of the design. During the whole process of eating, products and dishes do not fall out of the edible container (remaining in it from the first to the last bite).
- The convenience of use. It is convenient to consume even "complex" products (like salads and porridge) in an edible container, including walking down the street, without packing and cutlery.

### Industrial Applicability

The edible container is easy to manufacture, to fill with products, to assemble, simple and convenient to eat. The edible container modules can be (although not necessarily) exactly the same, as they can be produced on the same mold.

The edible container is assembled from two modules by simply turning the upper module with its subsequent application and tight connection with the lower module.

Food of an edible container resembles ice cream in a wafer cup, with a significant difference: unlike a cup, the internal volume of the edible container is initially closed from all sides.

## Claims

1. An edible container for food products comprising two halves of the same shape and design, each of which is made of baked dough and has the form of a thin-walled tray with side walls on which protrusions and hollows are made, herewith, each half is made symmetrical in plan in the shape of the tray relative to at least one axis passing along the surface of the bottom of the tray, and both halves are interconnected with the location of the protrusions of one half in the hollows of the other half for the formation of a hollow thin-walled shell, along the edge of the side walls of each tray a support end platform is made to ensure resting of the trays against each other when they are connected, and protrusions and hollows in each tray are located along this support platform, ***characterized in that***
the protrusions and hollows in each tray are located on the side of the inner wall of the tray while the protrusions are located above the level of the support platform, and the hollows are located below this level, the recesses are made on the outer surface of the tray opposite to each protrusion inside the tray extended along the height of side wall to form stiffeners on the outer surface, and each protrusion in the tray is located opposite to such recess.

2. A thermal mold for baking halves of an edible container according to claim 1, comprising a first heated plate, which is a matrix and bears at least one recess, repeating the external shape of the baked product, a second heated plate, which is a punch and bears at least one protrusion, repeating the internal shape of the products, while when closing the plates, the protrusion is located in the recess with a gap relative to the wall of the recess, ***characterized in that***
when the plates are closed, they are in contact with each other in the zone around the location of the recess in the matrix, made in the form of a tray open at the top, having an end platform along the edge of the side wall for forming the end platform of the edible container half and protrusions located along this platform located above the level of this platform to form protrusions on the outer surface of the edible container half, and hollows located on the inner wall of the tray below this platform for the formation of hollows on the wall of the half of the edible container, wherein the body of the second heated plate above the cavity in the zone of formation of the protrusions of the product includes through holes, each of which is made on the inner side of this plate with a cylindrical area that ends with tapered extension on the outer side of the plate.

3. The thermal mold according to claim 2, **characterized in that** it is equipped with a forced extraction device comprising a cap placed on the outer surface of the punch around the through holes, the cavity of which is connected with a compressor for pumping air from this cavity.

## Patentansprüche

1. Essbarer Behälter für Lebensmittelprodukte, umfassend zwei Hälften mit einer gleichen Form und Ausgestaltung, wobei jede davon aus gebackenem Teig hergestellt ist und die Form eines dünnwandigen Tabletts mit Seitenwänden, auf denen Vorsprünge und Vertiefungen ausgebildet sind, aufweist, wobei jede Hälfte in der Plansicht in der Form des Tabletts symmetrisch in Bezug auf wenigstens eine Achse, die entlang der Oberfläche der Unterseite des Tabletts verläuft, ausgebildet ist und beide Hälften mit dem Ort der Vorsprünge auf einer Hälfte und der Vertiefungen der anderen Hälfte verbunden sind, um eine hohle dünnwandige Schale auszubilden, wobei entlang der Kante der Seitenwände von jedem Tablett eine Tragendplattform dazu gefertigt ist, ein Anliegen der Tabletts aneinander, wenn sie verbunden sind, zu sichern, und Vorsprünge und Vertiefungen in jedem Tablett sich entlang der Tragplattform befinden, ***dadurch gekennzeichnet, dass***
die Vorsprünge und Vertiefungen in jedem Tablett sich auf der Seite der inneren Wand des Tabletts befinden, wobei die Vorsprünge sich über der Ebene der Tragplattform befinden und die Vertiefungen sich unterhalb dieser Ebene befinden, die Vertiefungen auf der äußeren Oberfläche des Tabletts ausgebildet sind, jeweils den Vorsprüngen des Tabletts gegenüberliegend, die sich entlang der Höhe einer Seitenwand erstrecken, um Versteifungen auf der äußeren Oberfläche auszubilden, und jeder Vorsprung in dem Tablett einer entsprechenden Vertiefung gegenüberliegt.

2. Wärmeform zum Backen von Hälften eines essbaren Behälters nach Anspruch 1, umfassend eine erste Heizplatte, die eine Matrix ist und wenigstens eine Vertiefung aufweist, die der äußeren Form des gebackenen Produkts entspricht, eine zweite Heizplatte, die eine Stanze ist und wenigstens einen Vorsprung aufweist, die der inneren Form der Produkte entspricht, wobei, beim Schließen der Platten, der Vorsprung sich in der Vertiefung befindet mit einer Lücke in Bezug auf die Wand der Vertiefung, ***dadurch gekennzeichnet, dass***
wenn die Platten geschlossen sind, sie miteinander in Kontakt stehen in der Zone um den Ort der Vertiefung in der Matrix, ausgebildet in der Form eines oben offenen Tabletts, aufweisend eine Endplattform entlang der Kante der Seitenwand zum Ausbilden der Endplattform der Hälfte des essbaren Behälters, und Vorsprünge, die sich entlang dieser Plattform befinden, über der Ebene dieser Plattform zum Ausbilden von Vorsprüngen auf der äußeren Oberfläche der Hälfte des essbaren Behälters und Vertiefungen, die sich auf der inneren Wand des Tabletts unter dieser Ebene befinden, zum Ausbilden von Vertiefungen auf der Wand der Hälfte des essbaren Behälters, wobei der Körper der zweiten Heizplatte über dem Hohlraum in der Zone des Ausbildens der Vorsprünge des Produkts Durchgangslöcher aufweist, wobei jedes davon auf der inneren Seite dieser Platte mit einem zylindrischen Bereich ausgebildet ist, der an einer sich verjüngenden Erstreckung an der äußeren Seite der Platte endet.

3. Wärmeform nach Anspruch 2, **dadurch gekennzeichnet, dass** sie mit einer Zwangsabzugsvorrichtung ausgestattet ist, die eine Kappe umfasst, die auf der äußeren Oberfläche der Stanze um die Durchgangslöcher angeordnet ist, wobei der Hohlraum davon mit einem Kompressor zum Pumpen von Luft aus diesem Hohlraum verbunden ist.

## Revendications

1. Récipient comestible pour produits alimentaires comprenant deux moitiés de même forme et de même conception, chacune étant faite de pâte cuite et ayant la forme d'un plateau à paroi mince avec des parois latérales sur lesquelles des saillies et des creux sont réalisés, chaque moitié étant symétrique en plan à la forme du plateau par rapport à au moins un axe passant le long de la surface du fond du plateau, et les deux moitiés sont reliées entre elles, les saillies d'une moitié étant placées dans les creux de l'autre moitié pour former une coquille creuse à parois minces, le long du bord des parois latérales de chaque plateau, une plate-forme de support d'extrémité est réalisée pour assurer le maintien des plateaux l'un contre l'autre lorsqu'ils sont reliés, et les saillies et creux de chaque plateau sont situés le long de cette plate-forme de support, ***caractérisé en ce que***
les saillies et creux de chaque plateau sont situés sur le côté de la paroi intérieure du plateau, les saillies étant situées au-dessus du niveau de la plate-forme de support et les creux étant situés au-dessous de ce niveau ; les renfoncements sont réalisés sur la surface extérieure du plateau à l'opposé de chaque saillie à l'intérieur du plateau et s'étendent sur la hauteur de la paroi latérale pour former des renforts sur la surface extérieure, et chaque saillie du plateau est située à l'opposé d'un tel renfoncement.

2. Moule thermique pour la cuisson des moitiés d'un récipient comestible selon la revendication 1, comprenant une première plaque chauffée, qui est une matrice et porte au moins un renfoncement, répétant la forme extérieure du produit cuit, une seconde plaque chauffée, qui est un poinçon et porte au moins une saillie, répétant la forme intérieure des produits, tandis que lors de la fermeture des plaques, la saillie est située dans le renfoncement avec un espace par rapport à la paroi du renfoncement, ***caractérisé en ce que***
lorsque les plaques sont fermées, elles sont en contact l'une avec l'autre dans la zone entourant l'emplacement du renfoncement dans la matrice, réalisée sous la forme d'un plateau ouvert en haut, ayant une plate-forme d'extrémité le long du bord de la paroi latérale pour former la plate-forme d'extrémité de la moitié du récipient comestible et des saillies situées le long de cette plate-forme située au-dessus du niveau de cette plate-forme pour former des saillies sur la surface extérieure de la moitié du récipient comestible, et des creux situés sur la paroi intérieure du plateau au-dessous de cette plate-forme pour former des creux sur la paroi de la moitié du récipient comestible, où le corps de la seconde plaque chauffée au-dessus de la cavité dans la zone de formation des saillies du produit comprend des trous traversants, dont chacun est réalisé sur le côté intérieur de cette plaque avec une zone cylindrique qui se termine par une extension conique sur le côté extérieur de la plaque.

3. Moule thermique selon la revendication 2, **caractérisé en ce qu'**il est équipé d'un dispositif d'extraction forcée comprenant un capuchon placé sur la surface extérieure du poinçon autour des trous traversants, dont la cavité est reliée à un compresseur pour pomper l'air de cette cavité.
